# EUROPEAN PATENT APPLICATION

(11) **EP 3 270 360 A1**
(43) Date of publication of application: **17.01.2018**
(21) Application number: 17180639.1
(22) Date of filing: 11.07.2017
(51) Int. Cl.: G07F 17/00, G06Q 10/08

(54) **AN APPARATUS FOR AUTOMATIC DISPENSING OF PRODUCTS, IN PARTICULAR PHARMACEUTICAL AND/OR PARAPHARMACEUTICAL PRODUCTS**

(30) Priority: 12.07.2016 IT 202016005104
(71) Applicant: Cyber S.r.l., 44124 Ferrara (IT)
(72) Inventor: RIMONDI, Gabriele, 44121 FERRARA (IT)
(74) Representative: Dall'Olio, Christian

(57) **Abstract**

The apparatus (1) for automatic dispensing of products, in particular pharmaceutical and/or parapharmaceutical products, comprises: a casing (2) having a box geometry, identifying a pair of lateral walls (20) to which are fixed: a rear wall (21), a front wall (22) and an upper wall (23), the front wall (22) comprising an access window (3) for an operator to an internal region of the casing (2); a plurality of mobile shelves (4) positioned parallel to one another and internally of the casing (2) between the respective lateral walls (20), the shelves (4) each comprising a plurality of housings (40) for storing the products; activating means able to move the shelves (4) internally of the casing (2), maintaining the shelves (4) parallel to one another according to a looped pathway comprising a pair of vertical branches and a pair of relay branches, lower and upper, with one of the vertical branches facing the access window (3) afforded in the front wall (22) of the casing (2); control means able to command the activating means so as to position each shelf (4) at the access window (3) in order to enable the operator to collect the desired products arranged in the respective housings (40).

## Description

The present invention relates to the technical sector of product distribution, in particular pharmaceutical and/or parapharmaceutical products.

In particular it concerns an apparatus for automatic dispensing of products.

In the pharmaceutical field, distribution apparatus are known that are located behind the sales counter, in which the pharmaceutical and/or parapharmaceutical products are positioned in stacked trays and are manually extractable.

The rapidity and effectiveness of the search for the desired drug is left to the ability and experience of the operator, in this case the pharmacist.

Management using these apparatus of a considerable number of pharmaceutical and/or parapharmaceutical products leads to serious drawbacks in both the step of management of the products and in the step of integration.

The step of management of the products is extremely difficult as the control of the use-by dates and the quantities available is normally left to a visual check, with a high probability of deterioration of the products (due to exceeding the use-by date) as well as the risk of running out of the products.

The step of integration of the products running out or out of stock becomes particularly difficult as the rapidity and effectiveness are left to the ability and experience of the operator, in this case the pharmacist.

These apparatus are further extremely unwieldy and have a limited capacity of manageable products.

Document US 2012/012606 describes a system for storing and automatically distributing pharmaceutical doses or products.

In the embodiment illustrated in figures 9 and 10, a plurality of carousels are included that are flanked and orientated vertically (according to vertical planes) which contain closed compartments for receiving doses of pharmaceutical products.

Each carousel identifies a pair of front and rear vertical branches which are connected to one another by means of curved branches.

In this embodiment there are no open shelves which stay parallel to one another following the activation of the movement means, especially at the curved branches of the carousels.

Document US 202/177922 relates to an automatic system for storing and retrieving articles of general nature.

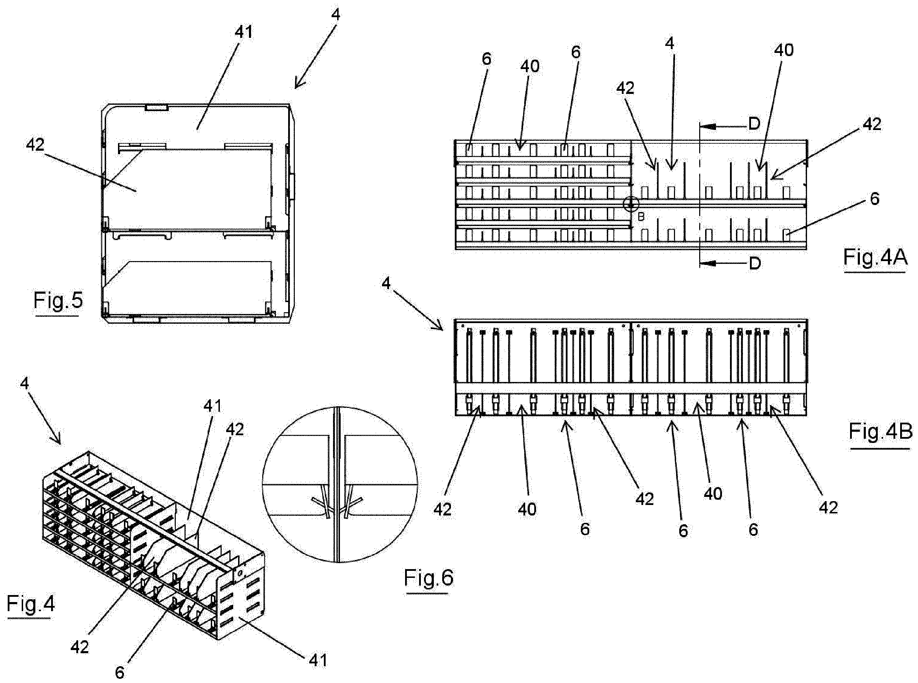

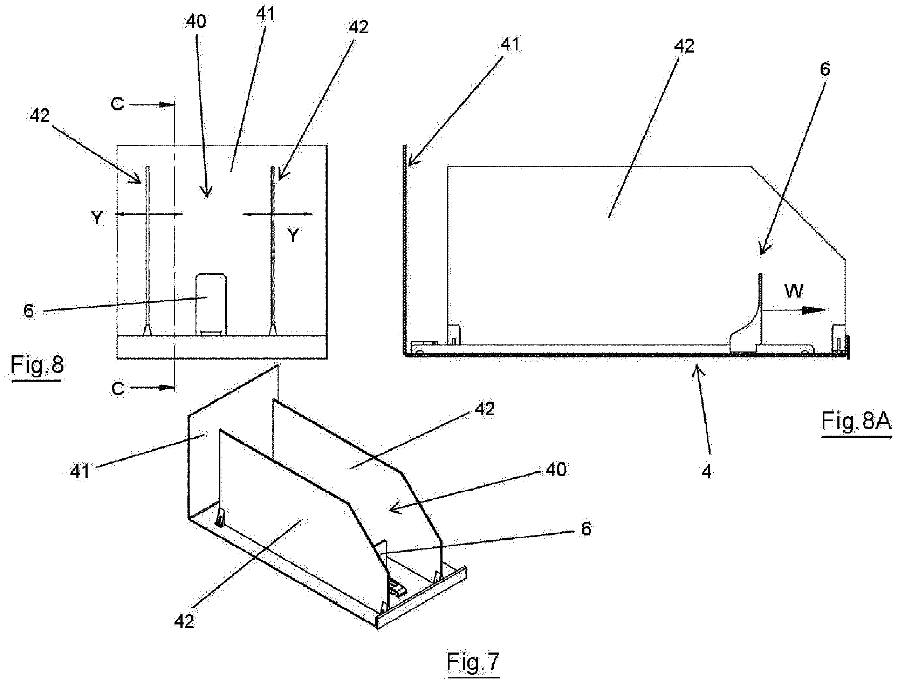

The articles are contained in closed cabinets fixed bilaterally and rotatably to a pair of chains which loop-wind around corresponding lower and upper wheels (figures 6, 7 and 11).

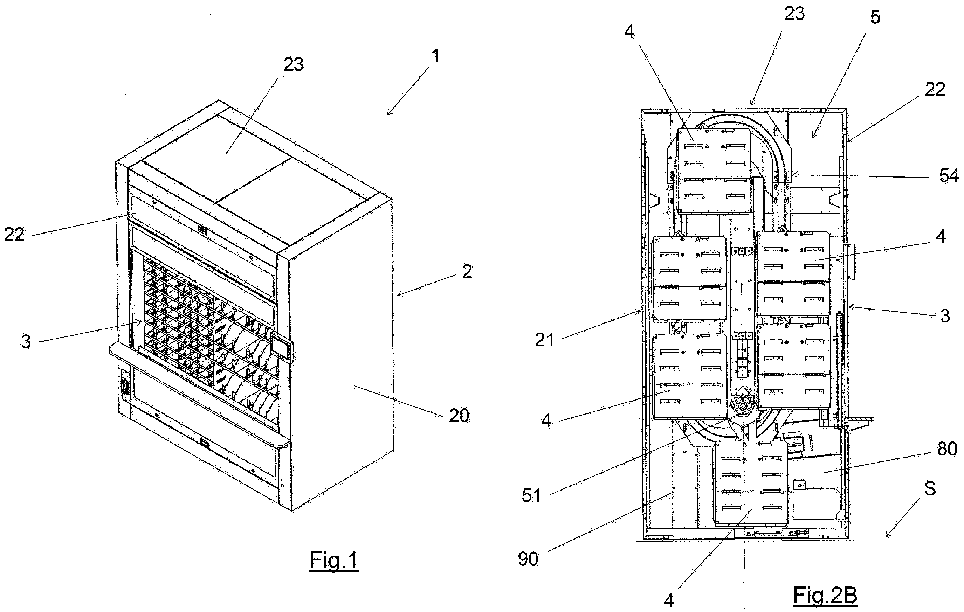

Access to the cabinets is not allowed by the lateral walls but only by the doors and fashioned in the frontal part (figure 1).

In this system there are not shelves but rather closed cabinets which do not have the constraint of staying parallel to one another as they are closed and the product contained therein will not tip over.

The aim of the present invention is to obviate the above-described drawbacks by providing an apparatus for automatic dispensing of products, in particular pharmaceutical and/or parapharmaceutical products, which enables any operator to successfully perform a rapid and effective search for the desired product.

A further aim of the invention is to provide an automatic dispensing apparatus enabling easy steps for management and integration of the products, avoiding any phenomenon of deterioration of the products, in particular in relation to use-by dates, and any sudden out-of-stock situation of the products.

A further aim of the invention is to provide an automatic dispensing apparatus having an especially limited size.

The above-indicated aims are obtained by an apparatus for automatic dispensing of products, in particular pharmaceutical and/or parapharmaceutical products, realised according to claim 1.

In particular embodiments, the distribution apparatus of the invention comprises one or more of the following characteristics, considered singly or in combination:
- the shelves are positioned parallel internally of the casing, with the activating means being able to move the shelves while maintaining them parallel;
- the activating means comprise a pair of activating devices arranged bilaterally to the shelves, in proximity of the lateral walls of the casing; each activating device comprising: a chain which winds in a loop on a pair of wheels, being a driven and a drive wheel, the chain comprising a pair of vertical branches and a pair of relay branches, lower and upper, with the axes of the wheels extending parallel to the ground and to the access window; motorising means able to move the drive wheel and the chain as a function of the signals in arrival from the control means; a plurality of fixing elements which enable rotatable support of the ends of the shelves and the connection of the ends to the chain; guide means able to engage with the fixing elements in order to maintain the shelves parallel during the movement step, for maintaining stability of the products in the respective housings;
- each fixing element comprises: a plate for rotatable support of the ends of the shelves; a pair of first levers for fixing the plate to the chain; a second lever having an end fixed to the plate and the other end engaging in the guide means;
- the guide means extend according to a looped geometry comprising a pair of vertical branches and a pair of relay branches, lower and upper;
- each shelf further comprises peripheral walls for lateral and posterior containment, and a plurality of internal walls that are transversally mobile for adjusting to various dimensional sizes of the products to be stored, each pair of internal walls defining a respective housing;
- internally of each housing a pusher member is slidably guided longitudinally and able to posteriorly abut the products contained in the housing for facilitating removal thereof by an operator, the action exerted by the pusher member preferably being adjustable as a function of the type of product contained in the respective housing;
- for each housing, a signalling means able to be activated by the control means, for facilitating the operator to locate the housing and accelerate the removal of the product contained in the housing;
- a plurality of first sensor means can be arranged in proximity of the peripheral edges of the access window and is able to interact with the control means; the first sensor means, when the activating means are deactivated, and the shelves are fixed, being able to detect the position of the operator's hand when it collects a product from a housing facing the access window, and the position of the corresponding housing;
- a plurality of second sensor means can be arranged in proximity of the peripheral edges of the access window and is able to interact with the control means; the second sensor means, when the activating means are activated, and the shelves are in a movement step, being able to detect the insertion of the operator's hand though the access window and command the blocking of the activating means;
- an air conditioning group can be included, able to create, in the internal region of the casing, an environment having a controlled temperature and humidity, for conserving particular products;
- the access window to the internal region of the casing can be provided with sliding doors which can inhibit access to the shelves at predetermined times;
- the control means comprise a processing unit, a display monitor and a command keyboard enabling: control of the activating means for positioning each mobile shelf at the position of the access window for enabling the operator to collect the desired products, and enabling, for each product arranged in the respective housing (40), alternatively or in combination, control of the stores, control of the use-by dates, an instant and/or dynamic inventory.

The characteristics of the invention are specified in the following with particular reference to some preferred, but not exclusive, embodiments, with reference to the accompanying tables of drawings, in which:
- figures 1, 2 illustrate two views, perspective and frontal, of the apparatus of the invention, for automatic dispensing of products;
- figures 2A, 2B illustrate corresponding views according to section A-A indicated in figures 2, in two successive working configurations of the apparatus of the invention;
- figure 3 illustrates a like view along section A-A in which some components have been omitted;
- figure 3A shows an enlarged view of detail J indicated in figure 3;
- figures 4, 4A, 4B illustrate three perspective views, frontal and in plan view, of a particularly significant first component of the apparatus of the invention;
- figure 5 is a view along section D-D indicated in figure 4A;
- figure 6 shows an enlarged view of detail B indicated in figure 4A;
- figures 7, 8 illustrate two views, perspective and frontal, of a second particularly significant component of the apparatus;
- figure 8A is a view along section C-C indicated in figure 8.

With reference to the above-mentioned tables, general reference numeral 1 denotes the apparatus for automatic dispensing of products, in particular pharmaceutical and/or parapharmaceutical products of the invention.

In an entirely novel way the apparatus comprises:
- a casing (2) having a box geometry, identifying a pair of lateral walls (20) to which are fixed: a rear wall (21), a front wall (22) and an upper wall (23), the front wall (22) comprising an access window (3) for an operator to an internal region of the casing (2);
- a plurality of mobile shelves (4) positioned parallel to one another and internally of the casing (2) between the respective lateral walls (20), the shelves (4) each comprising a plurality of housings (40) for storing the products;
- activating means able to move the shelves (4) internally of the casing (2), maintaining the shelves (4) parallel to one another according to a looped pathway comprising a pair of vertical branches, preferably parallel, and a pair of relay branches, lower and upper, with one of the vertical branches facing the access window 3 afforded in the front wall (22) of the casing (2); the vertical branches being defined by the looped pathway which vertical branches identify a pair of portions, frontal (80) and rear (90), of the internal region of the casing (2), where the front portion (80) faces the access window (3);
- control means able to command the activating means so as to position each shelf (4) at the access window (3) in order to enable the operator to collect the desired products arranged in the respective housings (40).

In the appended tables of drawings the mobile shelves (4) are arranged parallel to one another and parallel to the ground (S).

The shelves (4) can equivalently be arranged inclined so as to facilitate sliding, by force of gravity, of products positioned in the housings (40) towards the access window (3) (advantageously abutted).

The activating means advantageously comprise a pair of activating devices (5) arranged internally of the casing (2), bilaterally to the shelves (4), in proximity of the lateral walls (20).

By way of example, with reference to the appended tables, each activating device (5) comprises:
- a chain which is loop-wound on a pair of wheels, being a driven wheel (50) and a drive wheel (51), the chain comprising a pair of vertical branches and a pair of relay branches, lower and upper, with the axes of the wheels (50, 51) extending parallel to the ground (S) and to the access window (3);
- motorising means (52) able to move the drive wheel (51) and the chain as a function of the signals in arrival from the control means;
- a plurality of fixing elements (53) which enable rotatable support of the ends of the shelves (4) and the connection of the ends to the chain;
- guide means (54) able to engage with the fixing elements (53) in order to maintain the shelves (4) parallel during the movement step, for maintaining stability of the products in the respective housings (40).

The chain and the pair of wheels (50, 51) on which the chain winds are contained in a plane parallel to the adjacent lateral wall 20.

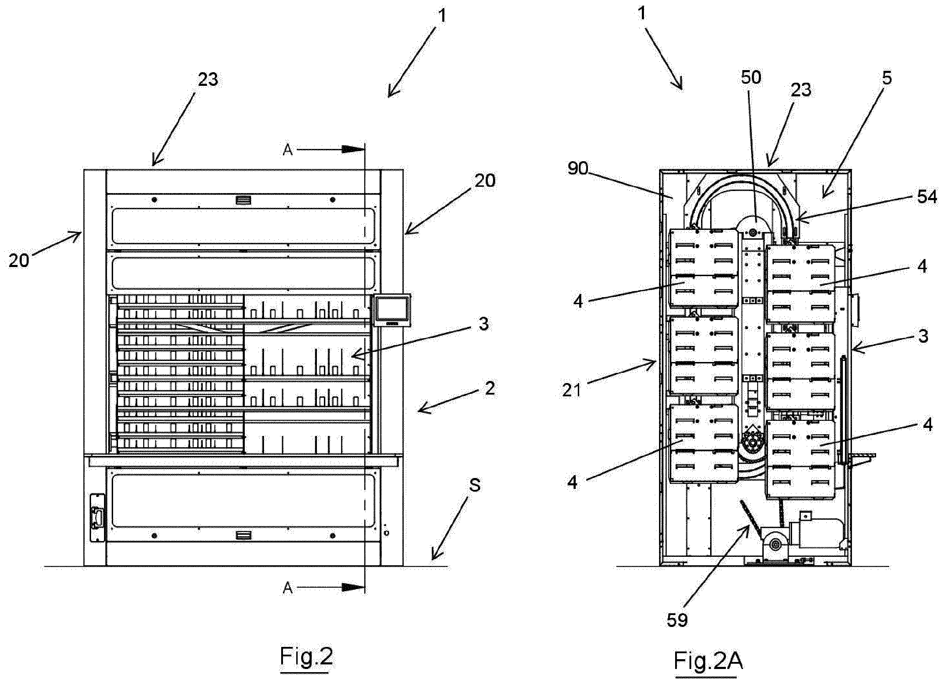

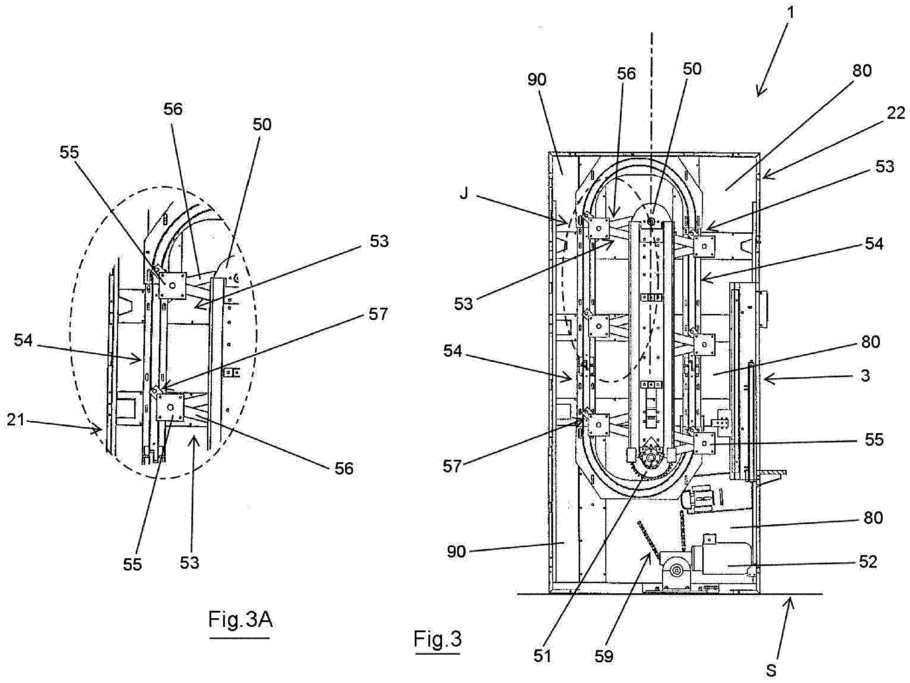

To enable correct movement of the shelves (4), the motorising means (52) can comprise, for both the activating devices (5), a single electric motor positioned in proximity of the ground (S), using a relay chain (59) which activates the drive wheel (51) (figures 2A, 3).

It is understood that if necessary, the motorising means (52) might comprise a pair of electric motors, each associated to the corresponding activating device 5, advantageously activated in synchrony by the control means.

In the appended tables the distribution apparatus (1) comprises six shelves (4) moved by the activating devices (5) according to a looped pathway.

Figure 2A illustrates how a distribution apparatus (1) is configured in such a way as to face up to three shelves (4) to the access window (3) in static conditions.

Figure 2B illustrates a movement step of the shelves (4) commanded by the control means for facing a shelf (4) to the access window (3) that was previously not accessible in the configuration illustrated in figure 2A.

Also in figure 2B two shelves (4) are illustrated arranged in the frontal portion (80) of the internal region of the casing (2), another two shelves (4) are illustrated arranged in the rear portion (90) of the internal region of the casing (2), with the remaining two shelves (4) passing along the lower and upper relay branches of the looped pathway.

In the preferred embodiment illustrated in the appended tables of drawings, each fixing element (53) can comprise:
- a plate (55) for rotatable supporting the ends of the shelves (4),
- a pair of first levers (56) for fixing the plate (55) to the chain,
- a second lever (57) having an end fixed to the plate (55) and another end engaging in the guide means (54).

In a preferred embodiment, the guide means (54) extend according to a looped geometry comprising a pair of vertical branches, preferably parallel, and a pair of relay branches, lower and upper.

Each shelf (4) further comprises peripheral walls (41) for lateral and posterior containment, and a plurality of internal walls (42) that are transversally mobile (Y) for adjusting to various dimensional sizes of the products to be stored (figures 4-8).

As shown in figure 4, each shelf (4) can comprise a plurality of shelves and a plurality of housings (40) configured differently in the various sections of the shelf (4), according to needs and the type of the products.

Each pair of internal walls (42) defines a respective housing (40) of the shelf (4).

A pusher member (6) can be included internally of each housing (40) that is slidably guided longitudinally (W) and able to posteriorly abut the products contained in the housing (40) for facilitating removal thereof by an operator.

The action exerted by the pusher member (6) can advantageously be adjustable as a function of the type of product contained in the respective housing (40).

In a first embodiment, not illustrated, the distribution apparatus (1) of the invention can comprise, for each housing (40), a visual signalling means able to be activated by the control means, for facilitating the operator to locate the housing (40) and accelerate the removal of the product contained in the housing (40).

The signalling means can of the visual and/or acoustic type, for example constituted by a luminous LED.

In a second embodiment, not illustrated, the distribution apparatus 1 can comprise a plurality of first sensor means arranged in proximity of the peripheral edges of the access window (3) and able to detect, when the activating means are deactivated, and the shelves (4) are fixed, the position of the operator's hand when it collects a product from a housing (40) facing the access window (3), and the position of the corresponding housing (40).

In this case the first sensors are advantageously arranged along the four sides of the access window (3) so as to create a control grid, or a matrix, following the *"pick to bin"* logic.

In the same way the distribution apparatus (1) of the invention can comprise a plurality of second sensor means, also arranged in proximity of the peripheral edges of the access window (3) and able to detect, when the activating means are activated, and the shelves (4) are in a movement step, the insertion of the operator's hand though the access window (3) and consequently immediately commanding the blocking of the activating means.

In this way the possible crushing of the operator's hand is avoided, to protect his or her safety.

In this case the second sensors can be arranged along the two vertical sides of the access window (3).

The first and the second sensors, for example of an optical type, interact with the control means for memorising and managing the information received.

The control means comprise a processing unit, a display monitor and a command keyboard (for example a touchscreen), which enable commanding the activating means for positioning each mobile shelf (4) at the access window (3).

The control means can further enable, for each product arranged in the respective housing (40), control of the stores and/or control of the use-by dates and/or an instant and/or dynamic inventory.

It is in fact at any time possible to verify and manage both the stores and the minimum stock of each product.

This enables prior planning of suitable re-ordering strategies, preventing both overstocking and short supply of the products most in demand.

In a further embodiment, not illustrated, the distribution apparatus 1 can comprise an air conditioning group able to create, in the internal region of the casing (2), an environment having a controlled temperature and humidity, should some products require this.

The access window (3) to the internal region of the casing (2) can be provided with sliding doors, either vertically or horizontally, which can inhibit access to the shelves (4) at predetermined times, for example during shifts, closure, etc.

The access to the control means of the proposed apparatus and therefore the products arranged on the shelves (4) can be enabled by name-recognition badges, for example of the RFiD type.

In this way locations in the shelves (4) could be created that are accessible only to specific and qualified operators.

On the basis of the foregoing it is clear how the apparatus for automatic dispensing of products, in particular pharmaceutical and/or parapharmaceutical products, enables any operator to successfully perform a rapid and effective search for the desired product.

This is fundamentally due to the presence of mobile shelves, according to a looped pathway, internally of a casing provided with an access window which enables the operator to collect and/or integrate (known as picking/refilling) the desired product.

In this way the search for the desired product does not rely on the ability and experience of the operator but is effectively managed by the control means which manage the movement of the shelves.

Consequently the automatic dispensing apparatus of the present invention can further enable easy steps for management and integration (refilling) of the products, avoiding any phenomenon of deterioration and any sudden out-of-stock situation of the products.

The control means can further enable, for each product arranged in the respective housing, control of the stocks and/or control of the use-by dates and/or an instant and/or dynamic inventory.

The particular arrangement of the shelves moved in a looped pathway extending vertically enables drastically limiting the plan-view dimensions.

This is particularly advantageous in pharmacies where the proposed apparatus can easily be installed in the immediate vicinity of the sales counter, exploiting volumes in a vertical direction that are usually not available for use.

The operator, in this case the pharmacist, consequently has the possibility of accessing the access window in a particularly rapid and safe way, following the *"goods to man"* logic, so that the desired product reaches the operator.

The degree of safety is particularly good as the second sensors, arranged along the two vertical sides of the access window, prevent any eventual crushing of the operator's hand, which might inadvertently cross through the access window when the shelves are in the movement step, by immediately commanding the blocking of the activating means.

The proposed apparatus for automatic dispensing is particularly useful for any type of product, in particular pharmaceutical and/or parapharmaceutical products.

The air conditioning group, in particular, is able to conserve the products in an environment having controlled temperature and humidity.

In the same way it is also able to manage other types of products having high unit value, in particular homeopathic and cosmetic products.

## Claims

1. An apparatus for automatic dispensing of products, in particular pharmaceutical and/or parapharmaceutical products, comprising:
- a casing (2) having a box geometry, identifying a pair of lateral walls (20) to which are fixed: a rear wall (21), a front wall (22) and an upper wall (23), the front wall (22) comprising an access window (3) for an operator to an internal region of the casing (2);
- a plurality of mobile shelves (4) positioned parallel to one another and internally of the casing (2) between the respective lateral walls (20), the shelves (4) each comprising a plurality of housings (40) for storing the products;
- activating means able to move the shelves (4) internally of the casing (2), maintaining the shelves (4) parallel to one another according to a looped pathway comprising a pair of vertical branches, preferably parallel, and a pair of relay branches, lower and upper, with one of the vertical branches facing the access window (3) afforded in the front wall (22) of the casing (2); the vertical branches being defined by the looped pathway, which vertical branches identify a pair of portions, frontal (80) and rear (90), of the internal region of the casing (2), where the front portion (80) faces the access window (3);
control means able to command the activating means so as to position each desired shelf (4) at the access window (3) in order to enable the operator to collect the desired products arranged in the respective housings (40); the apparatus (1) being **characterised in that** the activating means comprise a pair of activating devices (5) arranged bilaterally to the shelves (4), in proximity of the lateral walls (20) of the casing (2); each activating device (5) comprising:
- a chain which is loop-wound on a pair of wheels, being a driven wheel (50) and a drive wheel (51), the chain comprising a pair of vertical branches and a pair of relay branches, lower and upper, with the axes of the wheels (50, 51) extending parallel to the ground (S) and to the access window (3);
- motorising means (52) able to move the drive wheel (51) and the chain as a function of the signals in arrival from the control means;
- a plurality of fixing elements (53) which enable rotatable support of the ends of the shelves (4) and the connection of the ends to the chain;
- guide means (54) able to engage with the fixing elements (53) in order to maintain the shelves (4) parallel during the movement step, for maintaining stability of the products in the respective housings (40).

2. The apparatus of claim 1, **characterised in that** each fixing element (53) comprises:
- a plate (55) for rotatable support of the ends of the shelves (4),
- a pair of first levers (56) for fixing the plate (55) to the chain,
- a second lever (57) having an end fixed to the plate (55) and the other end engaging in the guide means (54).

3. The apparatus of claim 1 or 2, **characterised in that** the guide means (54) extend according to a looped geometry comprising a pair of vertical branches and a pair of relay branches, lower and upper.

4. The apparatus of one of claims from 1 to 3, **characterised in that** each shelf (4) further comprises peripheral walls (41) for lateral and posterior containment, and a plurality of internal walls (42) that are transversally mobile (Y) for adjusting to various dimensional sizes of the products to be stored; each pair of internal walls (42) defining a respective housing (40).

5. The apparatus of claim 4, **characterised in that** it comprises, internally of each housing (40), a pusher member (6) slidably guided longitudinally (W) and able to posteriorly abut the products contained in the housing (40) for facilitating removal thereof by an operator, the action exerted by the pusher member (6) preferably being adjustable as a function of the type of product contained in the respective housing (40).

6. The apparatus of one of claims from 1 to 5, **characterised in that** it comprises, for each housing (40), a signalling means able to be activated by the control means, for facilitating the operator to locate the housing (40) and accelerate the removal of the product contained in the housing (40).

7. The apparatus of one of claims from 1 to 6, **characterised in that** it comprises a plurality of first sensor means arranged in proximity of the peripheral edges of the access window (3) and able to interact with the control means;
the first sensor means, when the activating means are deactivated, and the shelves (4) are fixed, being able to detect the position of the operator's hand when it collects a product from a housing (40) facing the access window (3), and the position of the corresponding housing (40).

8. The apparatus of one of claims from 1 to 7, **characterised in that** it comprises a plurality of second sensor means arranged in proximity of the peripheral edges of the access window (3) and able to interact with the control means;
the second sensor means, when the activating means are activated, and the shelves (4) are in a movement step, being able to detect the insertion of the operator's hand though the access window (3) and command the blocking of the activating means.

9. The apparatus of one of claims from 1 to 8, **characterised in that** it comprises an air conditioning group able to create, in the internal region of the casing (2), an environment having a controlled temperature and humidity, for conserving particular products.

10. The apparatus of one of claims from 1 to 9, **characterised in that** the control means comprise a processing unit, a display monitor and a command keyboard enabling:
- commanding the activating means for positioning each mobile shelf (4) at the position of the access window (3) for enabling the operator to collect the desired products;
and enabling, for each product arranged in the respective housing (40), alternatively or in combination:
- control of the stores,
- control of the use-by dates,
- an instant and/or dynamic inventory.
